# EUROPEAN PATENT APPLICATION

(11) **EP 4 272 926 A1**
(43) Date of publication of application: **08.11.2023**
(21) Application number: 22171248.2
(22) Date of filing: 03.05.2022
(51) Int. Cl.: B29C 48/31, B05D 1/26, B29C 48/154, B29C 48/155, B05D 1/30, B29C 48/08

(54) **OFFSET DETERMINATION APPARATUS, SYSTEM AND METHOD**

(71) Applicant: LG Energy Solution, Ltd., Seoul 07335 (KR)
(72) Inventor: LEE, Mun Gu, 34122 Daejeon (KR); SONG, Min Sok, 34122 Daejeon (KR)
(74) Representative: Goddar, Heinz J.

(57) **Abstract**

Disclosed is a positioning apparatus configured to determine a position of an interposer in a cavity of a die. A fixation portion is configured to fix the positioning apparatus to a die. A projecting member configured to be moved into the cavity of the die in a depth direction. An offset gauge configured to measure a depth offset by which the projecting member is moved in the depth direction. Further disclosed is a battery manufacturing system and a method for positioning an interposer in a cavity of a die.

## Description

### TECHNICAL BACKGROUND

This application relates to the manufacture of a battery, particularly of a secondary battery. Furthermore, this application relates to determination of a position, or a specific arrangement, of an interposer that is arranged in a die for extruding a battery material, in relation to the die.

A manufacturing process of a battery may include extruding a battery material through a die. Depending on the type and configuration of the die, an interposer, such as a shim, may be placed inside to guide the battery material during the extrusion process. Here, a technical problem may arise regarding precisely and efficiently determining an offset of the interposer in relation to the die. The technical problem may further reflate to increasing the precision and efficiency of a battery manufacturing system and a battery manufacturing method.

### SUMMARY OF INVENTION

The technical problems can be solved by the subject matter as defined in the independent claims. Particular embodiments are given by the features of the dependent claims.

There may be provided a positioning apparatus configured to determine a position of an interposer in a cavity of a die. The positioning apparatus may comprise a fixation portion, a projecting member and an offset gauge. The fixation portion may be configured to fix the positioning apparatus to a die. The projecting member may be configured to be moved into the cavity of the die in a depth direction. The offset gauge may be configured to measure a depth offset by which the projecting member is moved in the depth direction.

The positioning apparatus may additionally include any of the features described below, particularly in connection with the drawings. The positioning apparatus may be additionally or alternatively referred to as an alignment apparatus or a measurement apparatus. The positioning apparatus may be adapted for positioning, alignment and/or adjustment of an interposer in a cavity of a die in relation to a front face of a die. The positioning apparatus may be suited to determine and/or measure a position of an interposer in a cavity of a die in relation to a front face of a die.

Generally, the term "positioning something" may be used herein as determining a position of it and/or as arranging it such as to be in a target position, depending on the context and unless technically inappropriate or indicated otherwise. The positioning apparatus may additionally be or include a jig, a template, a fitting, a shape for positioning an interposer in a cavity of a die. The positioning apparatus may be configured to maintain a positional relationship between an interposer and a die. In particular, the positioning apparatus may be capable of locking the position of an interposer in a cavity of a die. For this purpose, the positioning apparatus may comprise an arrest member, which may correspond to the projecting member, which arrests the interposer in the cavity of the die at a predetermined depth offset.

When a given interposer is arranged in the cavity of a given die, there may be a clearance remaining due to the positional relation and/or size relation between the interposer and the die. The term position of an interposer may be indicative of a positional relation and/or size relation between the interposer and the die, particularly in the depth direction. The position of the interposer in the cavity of a die may be determined by the depth offset. Unless technically inappropriate or indicated otherwise, the terms depth offset and position of an interposer are used interchangeably hereinafter for the sake of simplicity.

The depth offset may correspond to a distance by which the project member is moved in the depth direction, particularly from an initial position (which may be a reference position as described below) to a final position in which the project member is in physical contact with the interposer in the cavity of the die. As such, the depth offset may also correspond to (or indicative of) a distance between a reference point at, on or in the die and the interposer in the depth direction. In other words, the depth offset may be, or be determined by, a distance by which the interposer (and specifically its front face that is perpendicular to the depth direction) is offset (i.e., shifted or displaced) from a reference position at, on or in the die in the depth direction. For example, the reference position may be on a front face of the die and/or on a plane that is parallel to a front face of the die. Such a plane may correspond to an opening of the die that communicates to the cavity of the die.

The depth offset may be a one-dimensional measure in the depth direction. In such an example, the offset may also be referred to as a depth offset, when the offset is determined and/or measured in the depth direction. For example, the offset may be quantified in millimeters or a fraction of a millimeter.

It is noted that the positioning apparatus may be used with any suitable die that comprises a cavity in which an interposer may be arranged such that may be provided as described herein. Since the positioning apparatus is usable with any suitable die and any suitable interposer, reference is made generally to "a" die and "an" interposer, unless technically inappropriate or indicated otherwise.

The die and/or the interposer as disclosed herein may additionally be configured as described below, particularly in connection with the drawings. In particular, the die may be configured to extrude a battery material through the cavity and an opening of the die. The interposer may be a shim and/or a guide flow to shape a flow of the battery material that is extruded from the die. Furthermore, the cavity of the die may have a uniform height (i.e., single and constant height throughout its expansion) in that is maintained by (the height of) the interposer arranged in the cavity. The interposer may be configured to occupy a smaller volume than a volume of the cavity. In other words, the interposer may be configured to occupy a partial volume of the cavity. Unless indicated otherwise or technically inappropriate, the term volume, in particular partial volume of the cavity of the die, is used herein in terms of a three-dimensional measure (i.e., volume occupancy) and/or in terms of a shape (i.e., spatial occupancy) depending on the context.

The fixation portion may be configured to fix the positioning apparatus to a die, particularly in a stationary manner. The fixation portion may in addition include any of the features described below, particularly in connection with the drawings. As discussed in detail below, the fixation portion may be configured to fix the positioning apparatus to the die by means of an electromagnetic force. For this purpose, the die may be configured accordingly, for example by being made of a magnetizable material or by comprising a magnetizable portion. Additionally or alternatively, the fixation portion may be capable of mechanically fixing the positioning apparatus, for example by means of a snap joint, a screw joint or any other mechanical connection, to a die that is configured accordingly. Herein, the fixation portion or the positioning apparatus being fixed to the die may indicate that a position of the fixation portion, or the positioning apparatus, remains unchanged (i.e., is stationary) in relation to a position of the die.

In particular, the fixation portion fixing the positioning apparatus to a die does not affect the feature that the project member is movable in the depth direction. Accordingly, the project member may be configured to be moved in the depth direction in relation to, and/or independently from, the fixation portion.

The projecting member may be configured to be moved into the cavity of the die in a depth direction. Herein, the expression that the projecting member "is moved", "is movable", "is configured to move", "moves", or the like in the depth direction indicates that the projecting member as a whole may move in the depth direction and/or that the projecting member may be extendible (and also retractable) in the depth direction, unless indicated otherwise or technically inappropriate. The projecting member may be configured to be moved in the depth direction separately from the rest of the positioning apparatus, particularly from the fixed portion. Herein, moving the projecting member does not per se result in moving the positioning apparatus as a whole, unless indicated otherwise or technically inappropriate. In particular, the projecting member may be moved while the positioning apparatus is fixed to a die.

The projecting member may additionally include any of the features described below, particularly in connection with the drawings. The project member may have an elongated shape, such as a pin shape, along the depth direction. The project member may have a conical shape pointing in the depth direction. The project member may be mechanically connected to the fixation portion so as to be movable in relation to the fixation portion. The project member moving in relation to the fixation portion may indicate that the project member moves while the fixation portion is stationary. Although the project member is a part of the positioning apparatus, moving the project member is not considered herein to affect the fixation of the positioning apparatus to the die. In other words, moving the project member is not considered herein to change the position of the positioning apparatus.

The project member may be moved manually, for example by hand or using an adjustment screw, or automatically, for example by using an actuator. Additionally or alternatively, the project member may be mechanically biased in the depth direction, particularly, by means of a spring tension. The projecting member may be part of a caliper.

The offset gauge may be configured to measure a depth offset by which the projecting member is moved in the depth direction in relation to the fixation portion. The offset gauge may additionally include any of the features described below, particularly in connection with the drawings. The offset gauge may be mechanically and/or electrically coupled with the project member to determine or measure the depth offset. For example, the offset gauge and the projecting member may be parts of a caliper. The offset gauge may comprise an analog caliper and/or a digital caliper. The offset gauge may be further configured to display the depth offset.

The depth offset may be as specified above and/or as described below, particularly in connection with the drawings. As clarified herein, the depth offset may refer to a distance by which the project member is moved in the depth direction and may also correspond to, or be indicative of, a distance of the interposer, particularly a front face thereof, from a reference position at, on or in the die, particularly from a front face of the die.

The positioning apparatus disclosed herein may allow for a precise and efficient determination of a positional relation and/or size relation, by means of a depth offset, between a die and an interposer that is arranged in a cavity of the die. Accordingly, the precision and/or efficiency for battery manufacturing may be increased.

The projecting member may be further configured to be moved in a height direction that is different from, particularly perpendicular to, the depth direction. The projecting member may be configured to be moved in the height direction separately from the rest of the positioning apparatus, particularly from the fixed portion. Herein, moving the projecting member does not per se result in moving the positioning apparatus as a whole, unless indicated otherwise or technically inappropriate. In particular, the projecting member may be moved while the positioning apparatus is fixed to a die. For example, the height direction may be a direction in which the projecting member is moved in order to be aligned with (i.e., at a same level in the height direction as) a cavity of a die or an interposer arranged in the cavity. In particular, the positioning apparatus may be arranged in relation to a die such that the height direction is parallel to a front face of the die. The projecting member may be moved along (parallel to) the front face of the die in the height direction until being aligned with (i.e., at a same level in the height direction as) a cavity of the die or an interposer that is arranged in the cavity.

Accordingly, the apparatus may be capable of defining a reference position on a front face of a die, for example by moving the projecting member in the depth direction against the front face of the die until being a physical contact is made, and then moving the projecting member in the height direction until being aligned with a cavity of the die or with an interposed arranged therein. Accordingly, the apparatus allows for a precise and efficient determination of a position of an interposer in a cavity of a die. Furthermore, the projecting member being movable in the height direction may allow for the positioning apparatus being usable for different types of dies, which may have different shapes and/or different sizes, particularly in terms of a shape and size of the front face. Thus, the versatility and applicability of the positioning apparatus may be increased.

The positioning apparatus may further comprise a height adjustment device that is configured to move the projecting member in the height direction. The height adjustment device may comprise an adjustment screw. The height adjustment device and/or the adjustment screw may support the movement of the projecting member in the height direction as described above or described below, particularly in connection with the drawings. In particular, the projecting member may be mechanically coupled to the adjustment screw such that the lengthwise adjustment direction of the adjustment screw corresponds to the height direction.

Accordingly, a position of the projecting member may be precisely controlled. In particular, the positioning apparatus may be usable for different types of dies, which may have different shapes and/or different sizes, thereby increasing versatility and applicability of the positioning apparatus. For example, the height adjustment device, particularly the adjustment screw, may be used to move the projecting member by a predetermined height to be aligned with a cavity of a die or an interposer arranged therein. For example, the predetermined height may be predetermined in accordance with a height of a front face of the die and a height of the interposer. In a specific example, the heights of the front face of the die and the interposer may be equal to a one-dimensional measure D (e.g., 0.5 mm, 1.0 mm, 1.5 mm, 2.0 mm, 2.5 mm or any other value therebetween). In this example, the projecting member being in physical contact with the front face of the die (i.e., at a reference position) may mean that that the projecting member will be aligned with the cavity of the die or the interposer arranged therein by lowering (i.e., moving in a negative height direction) the projecting member from this reference position by D.

The positioning apparatus may further comprise a height gauge to measure and/or display a height offset by which the projecting member is moved in the height direction from a reference position. The height gauge may be used in combination with the height adjustment device, particularly with the adjustment screw. The height gauge may be mechanically coupled to the projecting member to measure the height offset. The height gauge may be configured to display the height offset. The height gauge may comprise a caliper arranged in the height direction so as to measure the height offset. The height gauge may comprise an indicator operably coupled to the projecting member. For example, the height gauge may be configured to display the height offset with an accuracy of ± 0.1 mm or smaller, ± 0.01 mm or smaller or ± 0.001 mm or smaller.

The reference position may be as described above and/or as described below, particularly in connection with the drawings. In particular, the positioning apparatus may be arranged such that the reference position is on a front face of the die, from which the projecting member may be moved in the height direction to be aligned with a cavity of the die or an interposer arranged therein, and then moved in the depth direction until the projecting member physically contacts the interposer.

Accordingly, the height gauge may provide an output about the height offset and thus the position of the projecting member for a user. Accordingly, the precision of the determination of the depth offset may be increased Accordingly, the position of the interposer may be determined in a more precise manner. This may further increase the versatility and applicability of the positioning apparatus for different shapes and dimensions of dies.

The fixation portion may comprise a magnet and/or a solenoid to fix the positioning apparatus to a magnetizable body of the die. In this manner, the fixation portion may be configured fix the positioning apparatus to such a die by means of an electromagnetic force. Accordingly, the fixation of the positioning apparatus to the die may be performed without exerting mechanical forces, thereby further increasing the precision when determining the position of an interposer in a cavity of the die.

The projecting member may have a conical shape tapering towards an end in the depth direction. In particular, the projecting member may be arranged such that a tip of the conical shape points towards a cavity of a die or an interposer arranged therein. Accordingly, a contact surface of the projecting member may be reduced. Accordingly, moving the projecting member in a/the height direction, in particular sliding along and on a front face of the die, may be facilitated.

The projecting member may be biased by a spring in the depth direction. The spring may exert a spring tension onto the projecting member in the above-described manner. Accordingly, the projecting member may be moved in the depth direction automatically without an external or active moving process. This may further facilitate the determination of a position of an interposer in a cavity of a die. Furthermore, using a spring may cause a repulsion when the projecting member "jumps" from a surface (e.g., front face) of the die to the interposer (e.g., its front face). Accordingly, there may be an acoustic feedback and/or a mechanical (vibrational) feedback, which may be exploited to verify that the projecting member has arrived at the interposer.

The offset gauge may be further configured to display the depth offset from a depth reference position. The offset gauge may comprise a display unit configured to display the depth offset. The offset gauge may comprise an indicator operably coupled to the projecting member. Accordingly, a position of an interposer in a cavity of a die may be determined in a more precise and more efficient manner. For example, the offset gauge may be configured to display the depth offset with an accuracy of ± 0.1 mm or smaller, ± 0.01 mm or smaller or ± 0.001 mm or smaller.

Further provided is a battery manufacturing system comprising a die, an interposer and a positioning apparatus. The die and/or the interposer may be as described above and/or may have any of the respective features described below, particularly in connection with the drawings. In particular, the interposer may be configured to occupy a partial volume of the cavity of the die, in order to shape a flow of a battery material extruded by/from the die, in any manner described herein. The positioning apparatus of the system may include any of the features of the positioning apparatus disclosed herein.

The die may be configured to extrude a battery material through an opening of the die. The die may have a front face, a cavity and the opening. The opening of the die may be formed at the front face and communicate with the cavity. The interposer may be arranged in the cavity of the die. The positioning apparatus may be configured to determine a position of the interposer. The positioning apparatus may comprise a fixation portion, a projecting member and an offset gauge. The fixation portion may be configured to fix the positioning apparatus to the die. The projecting member may be configured to be moved into the cavity of the die in a depth direction. The offset gauge may be configured to measure a depth offset by which the projecting member is moved in the depth direction in relation to the fixation portion.

The battery manufacturing system may be configured to manufacture a battery, in particular a secondary battery. The manufacturing of a battery may involve an extrusion process in which a battery material, such as an active material for an electrode, is extruded through a die. For this purpose, the die may comprise the cavity configured to receive the battery material, and the opening that communicates (i.e., is fluidly connected to) the cavity such that the battery material can discharge through the opening of the die.

The die may be configured such that the battery material is extruded, or discharged, through the opening of the die in a principal extrusion direction, which may be defined by a spatial relation (such as a connection line) of the cavity and the opening of the die. In other words, the battery material may flow out of the die in the principal extrusion direction. Here, the expression "principal" is used to take into account that the battery material may be a flowable (fluid or at least viscous) material which may spread laterally after being extruded from the die. The principal extrusion direction may be defined so as to be invariant from such spread. As described in detail herein, the system may be arranged such that the principal extrusion direction of the die and the depth direction of the positioning apparatus are identical.

The die may enclose the cavity inside. The cavity of the die may be fluidly connected to a supply system configured to feed the battery material to the cavity of the die by means of a pressure gradient. Additionally, a manifold and/or a feed port may be formed in the die so as to communicate with the cavity and fluidly connect the supply system with the cavity. The die may be shaped and dimensioned such that an overpressure received from the supply system is released through the opening of the die, thereby extruding the battery material received in the cavity from the supply system.

The die, or the cavity of the die, may be shaped such that the cavity has a general flat shape with a uniform height. The interposer may be arranged in the cavity of the die in order to shape a flow of the battery material extruded by the die. For this purpose, each interposer may be shaped (e.g., with one or more branch portions extending from a backside portion) and dimensioned (e.g., with a suitable thickness, width and/or depth) in an individual manner according to respective requirements to the flow of the battery material. The interposer may be referred to as a shim, a spacer, a flow guide or the like.

The interposer and the cavity of the die may be shaped and dimensioned such that the interposer, when being arranged in the cavity of the die, rests against some of inner walls of the die that bound the cavity except the opening of the die. As described herein, the interposer may be configured to occupy a partial volume of the cavity of the die. The interposer may have a smaller dimension at least in the principal extrusion direction than the cavity of the die. The positioning apparatus, or the system disclosed herein, may be configured to determine said depth offset, which may be helpful for aligning the interposer in the cavity of the die in a proper manner and/or for verifying whether the interposer is properly aligned in the cavity of the die.

A height of a front face of a die may be in a range of 0.1 mm to 3 mm. Particularly, the height of a front face of a die may be 0.1 mm or more, 0.2 mm or greater, 0.4 mm or greater, 0.5 mm or greater, 0.8 mm or greater, 1 mm or greater or 1.5 mm or greater. Additionally or alternatively, the height of a front face of a die may be 3 mm or smaller, 2.5 mm or smaller, 2 mm or smaller, 1.8 mm or smaller, 1.5 mm or smaller, 1.2 mm or smaller, 1 mm or smaller, 0.8 mm or smaller or 0.5 mm or smaller.

A height of an interposer, particularly a height of a front face thereof, maybe in a range of 0.1 mm to 3 mm. Particularly, the height of an interposer may be 0.1 mm or more, 0.2 mm or greater, 0.4 mm or greater, 0.5 mm or greater, 0.8 mm or greater, 1 mm or greater or 1.5 mm or greater. Additionally or alternatively, the height of an interposer may be 3 mm or smaller, 2.5 mm or smaller, 2 mm or smaller, 1.8 mm or smaller, 1.5 mm or smaller, 1.2 mm or smaller, 1 mm or smaller, 0.8 mm or smaller or 0.5 mm or smaller.

Accordingly, a proper positioning of the interposer in the cavity of the die may be desirable in order to increase the accuracy, efficiency and/or quality of the battery manufacturing. In the light of this, the system disclosed herein may allow a precise determination of a position of an interposer in a cavity of a die, thereby achieving the effects mentioned above.

The die may comprise a die cover and a die base. The cavity of the die may be formed by maintaining a gap between the die cover and the die base. The die cover may have a front face perpendicular to the principal extrusion direction. The die base may have a front face perpendicular to the principal extrusion direction. The front face of die cover and the front face of the die base may be, or be part of, the front face of the die. The opening of the die may be formed between the front face of the die cover and the front face of the die base. The front face of the die cover and/or the front face of the die base may have a uniform height in a height direction perpendicular to the extrusion direction.

Herein, the terms gap and cavity may be interchangeably used for the sake of simplicity, unless technically inappropriate or indicated otherwise. The cavity, or the gap, between the die cover and the die base may be maintained by the interposer. For example, the cavity of the die may be formed between end faces of two parts of the die. The parts of the die may be a first die part and a second die part, a first die half and a second die half, or a die cover and a die base, or any other combination of two parts. The two parts of the die may have a respective end face such that the end faces of the two parts of the die face each other and correspond to each other in terms of a flat shape and a (substantially) equal dimension. An interposer may be interposed between the two parts of the die, particularly between the end faces of the two parts of the die, in order to shape a flow of a battery material from the die. As described, the interposer may be configured to occupy a partial volume of the cavity of the die.

The die may comprise a backside wall opposite to the opening of the die. The interposer may be shaped and dimensioned such to be in physical contact with the backside wall in the cavity of the die. For example, the interposer may comprise a backside portion to rest against the backside wall of the die in the cavity of the die. The backside portion may have an elongated, bar-like shape, and the interposer may be arranged in the cavity of the die such that the backside portion is aligned perpendicular to the principal extrusion direction of the die. The interposer may further comprise one or more branch portions that extend from the backside portion. Any of the branch portions may have an elongated shape, for example a general shape similar to a bar, along a direction that is perpendicular to an elongation direction of the backside portion. As a result, the interposer may have a general shape that is similar to a capital alphabet letter T or a capital alphabet letter E, a square bracket, a rake or a comb in a plan view. In addition, the branch portions of the interposer may be shaped and dimensioned individually, starting from a general bar shape, according to requirements to the flow of the battery material extruded by/from the die.

The opening of the die may correspond to the cavity of the die. The opening of the die may be formed as a void plane at the front face of the die between the two die parts, for example as described above. In other examples, the opening may be formed by shaping and dimensioning the die such to have a void area in the front face of the die so as to communicate (i.e., be fluidly connected) with the cavity of the die. The opening of the die may have a general shape of a slit or an elongated slot along a direction perpendicular to the principal extrusion direction of the die. The opening of the die may have a uniform height in a direction perpendicular to the principal extrusion direction of the die (and to its elongation direction if applicable). If applicable, the height of the opening may correspond (e.g., be equal) to a distance between the two parts of the die.

In specific examples, the die, or any of the two die parts if applicable, may comprise a body portion and a lip portion protruding from the body portion in the principal extrusion direction. Accordingly, the lip portion, if existent, may form a discharge portion of the die, through which the battery material is discharged (and thus extruded) from the die. The lip portion may have a front face arranged perpendicular to the principal extrusion direction. The front face of the lip portion may be, or form part of, the front face of the die.

The cavity of the die may have a depth in the depth direction. The interposer may have a depth smaller than the depth of the cavity of the die by a depth difference of 2.5 mm or less, by 2 mm or less, by 1.5 mm or less, by 1.2 mm or less, by 1 mm or less, by 0.8 mm or less, by 0.6 mm or less, by 0.5 mm or less, by 0.4 or less, by 0.3 mm or less, by 0.2 mm or less or by 0.1 mm or less. Additionally or alternatively, the depth difference may be at least 0.1 mm, at least 0.2 mm, at least 0.4 mm, at least 0.5 mm, at least 0.6 mm, at least 0.8 mm, at least 1 mm or any other value mentioned herein. Accordingly, the positioning apparatus or the system disclosed herein may allow for a determination of the position in the depth direction within the aforementioned range.

Further provided is a method for positioning of an interposer in a cavity of a die. The method may comprise the following: determining a reference position on a front face of the die; moving a projecting member from the reference position in a height direction by a predetermined height distance and/or until the projecting member is at a same level in the height direction as the interposer; while maintaining a position of the projecting member in the first direction, moving the projecting member into the cavity in a depth direction until the projecting member is in physical contact with the interposer; and determining a depth offset position by which the projecting member is moved in the depth direction from the reference position.

The method disclosed herein may be carried out using the positioning apparatus as described herein, which particular may include any of the additional features. The method may be carried out using the battery manufacturing system as describe herein, which particularly may include any of the additional features. Furthermore, the method may be carried out in any manner described above or below, particularly in connection with the drawings. It is noted that even if an operation or a procedural step is not explicitly formulated as a method-like feature, it nonetheless may form part of the method disclosed herein. Accordingly, the method disclosed herein may be able to achieve any of the technical affects disclosed herein.

For determining a reference position on the front face of the die, the die and the positioning apparatus may be arranged such that the projecting member of the positioning apparatus rests against the front face of the die. Additionally or alternatively, the positioning apparatus and the die may be arranged in any manner described herein. As described above, the front face of the die may be flat and arranged along the height direction perpendicular to the depth direction. The refence point may be as described above and may mark an initial position from which the projecting member of the positioning apparatus is moved in the height direction and in the depth direction until arriving at the interposer, particularly at a front face thereof.

For moving a projecting member from the reference position in a height direction by a predetermined height distance and/or until the projecting member is at a same level in the height direction as the interposer.

For moving the projecting member into the cavity in a depth direction until the projecting member is in physical contact with the interposer, while maintaining a position of the projecting member in the first direction, the positioning apparatus and the die may be configured as described above. The projecting member may slide along the front face of the die, particularly of a part of the die, such as a die cover. For this purpose, the projecting member may have a conical shape tapering towards the front face of the die, and thus a reduced cross-sectional area at an end contacting the front face of the die. This may facilitate the moving of the projecting member along the front face of the die.

For determining a depth offset position by which the projecting member is moved in the depth direction from the reference position, the projecting member maybe mechanically biased, for example by a spring, towards the interposer, particularly the front face thereof. Additionally or alternatively, the projecting member may be moved manually or automatically in any manner described herein.

The projecting member is described above to be moved first in the height direction and then in the depth direction from a reference position until resting against an interposer in a cavity of a die. The positioning apparatus and the system are not limited hereto. Depending on shapes and dimensions of the positioning apparatus and a die and to which the positioning apparatus is applied, the projecting member may be moved in the height direction and in the depth direction simultaneously, or first in the depth direction and then in the height direction, or in any arbitrary sequence of moving in the depth direction and moving in the height direction.

The positioning may be facilitated when starting from a front face of a die, particularly when a height of the front face of the die and a height of an interposer are known as described above. The positioning apparatus and the die may be arranged such that the projecting member of the positioning apparatus rests against the front face of the die, from which the projecting member maybe moved in the height direction by a predetermined height distance, which may be equal to the height of the front face of the die.

### BRIEF DESCRIPTION OF DRAWINGS

The accompanying drawings illustrate some particular examples and are intended to help understanding the present invention. Herein and in the drawings, a same reference sign or a series of reference signs may be used in different examples to indicate a same, similar or analogical element.
FIG. 1A and 1B schematically show a cross-sectional view of a battery manufacturing system according to an example.
FIG. 2 schematically shows a perspective view of a die according to an example.
FIG. 3 schematically shows an exploded perspective view of a die and an interposer according to an example.
FIG. 4 schematically shows a cross-sectional view of a battery manufacturing system according to an example.
FIG. 5 schematically shows a cross-sectional view of a battery manufacturing system according to an example.
FIG. 6 shows a flow diagram of a method for positioning an interposer in a cavity of a die according to an example.

### DETAILED DESCRIPTION

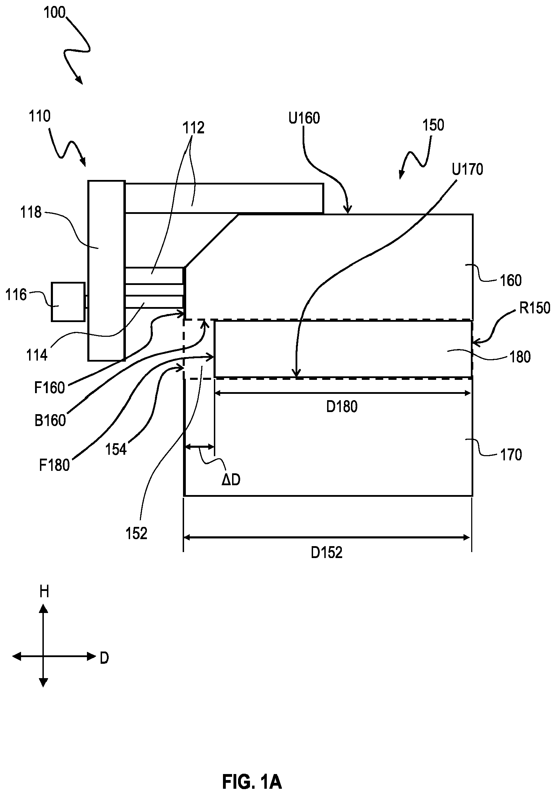

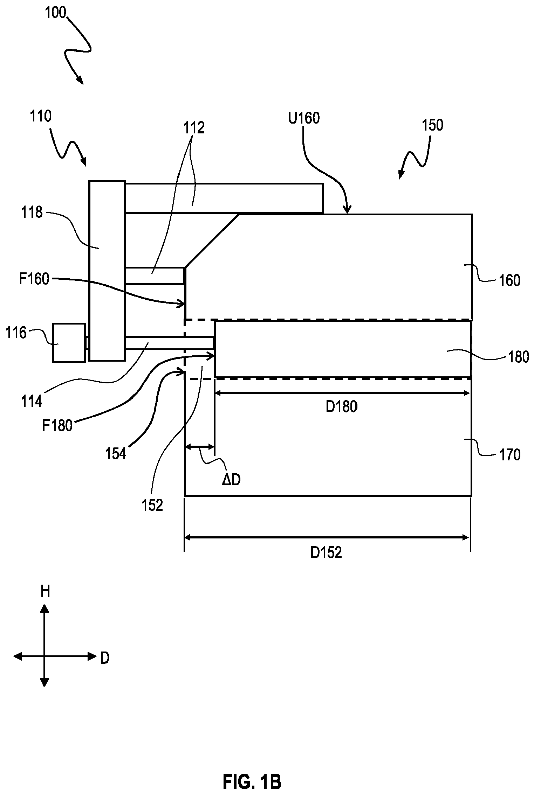

FIG. 1A and 1B show a battery manufacturing system 100 according to an example. The battery manufacturing system 100 comprises a positioning apparatus 110 and a die 150. The die 150 comprises a cavity 152 formed in the die 150, an opening 154 and a front side F160. An interposer 180 is arranged in the cavity 152 of the die 150. The battery manufacturing system 100, the die 150 and the positioning device 110 may include any of the respective features described above, unless technically inappropriate or indicated otherwise in the following.

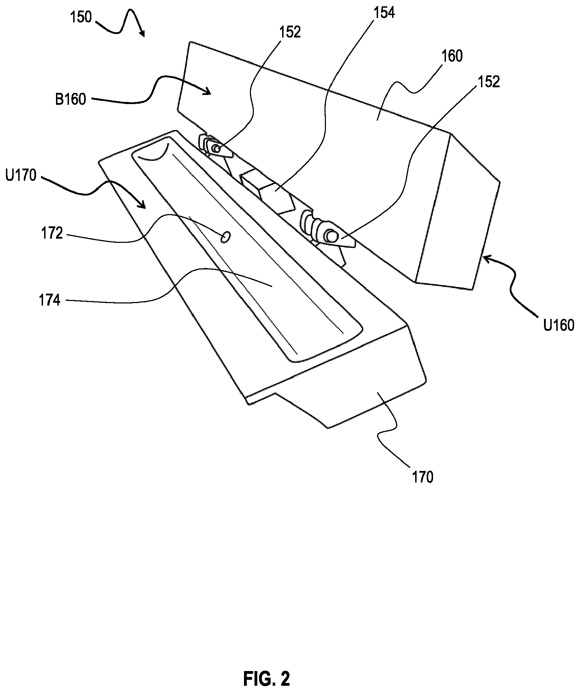

The die 150 is configured to extrude a battery material (not shown) through the opening 154. In the example shown in FIG. 1A and 1B, the die 150 comprises a die cover 160 and a die base 170, which alternatively may be referred to as a first die half 160 and a second die half 170, or an upper die 160 and a lower die 170. Here and in connection with the following drawings FIG. 2 to 6, it is noted that spatial expressions such as "upper" and "bottom" are used relative to the orientation of the drawings, namely with reference to a height direction H as indicated in the drawings. Similarly, spatial expressions such as "front" and "backside" are used relative to the orientation of the drawings, namely with reference to a depth direction D as indicated in the drawings. As described above, the depth direction D may correspond to a principal extrusion direction of the die 150.

The die cover 160 has a bottom end face B160, an upper face U160 and the front face F160. The die base 170 has an upper end face U170. The die cover 160 and the die base 170 may be arranged such that the bottom end face B160 of the die cover 160 and the upper end face U170 of the die base 170 face each other. The bottom end face B160 of the die cover 160 and the upper end face U170 of the die base 170 may correspond to each other in terms of a shape and a dimension. As such, the bottom end face B160 of the die cover 160 would rest tightly on the upper end face U170 of the die base 170, if the interposer 180 was not arranged therebetween. The interposer 180, which has a uniform height in the height direction H, maintains a gap between the die cover 160 and the die base 170, particularly corresponding to the height of the interposer 180, thereby resulting in a cavity 152 being formed between the die cover 160 and the 170.

However, this is a non-limiting example. In other examples not shown in the drawings, the die 150 may have a rigid structure in which a cavity is intrinsically formed and maintained even in absence of an interposer. Furthermore, the die 150 may be provided as a single piece die or may comprise more than two die parts, other than shown in the drawings. Herein, the die 150 as depicted in the drawings comprise two die parts for the sake of quick understanding of the subject matter.

The interposer may be shaped and/or dimensioned as described above. The interposer 180 may be arranged such to rest against a backside R150 of the die 150. The interposer 180 may have a uniform height and occupy a partial volume of the cavity 152. In the example shown in FIG. 1A and 1B, the interposer 180 has a front face F180 arranged perpendicular to the depth direction D. The interposer 180 may have a depth D180 that is smaller than a depth D152 of the cavity 152. Accordingly, a clearance may remain between the front face F180 of the interposer 180 and the opening 154 of the die 150. The dimension of this clearance in the depth direction D may correspond to a depth offset ΔD.

The opening 154 of the die 150 is coplanar (i.e., aligned with) the front face F160 of the die 150. Hence, the depth offset ΔD may be measured from the front face F160 to the front face F180. The depth offset ΔD may be useful for diverse technical purposes. In particular, the depth offset ΔD may be indicative of whether the interposer 180 has been properly positioned in the cavity 152. Further, the depth offset ΔD may assist in positioning the interposer 180 in the cavity 152. In the example of FIG. 1A and 1B, the front face F160 refers to the front face of the die cover 160. The front face F160 may be further coplanar with a front face of the die base 170.

In the example of FIG. 1A and 1B, the positioning apparatus 110 comprises a fixation portion 112, a projecting member 114 and an offset gauge 116. The positioning apparatus 110 may be arranged such that the fixation portion 112 rests against the upper face U160 and/or any other face of the die 150, for example on the front face F160. The fixation portion 112 fixes the positioning apparatus 110 to the die 150. For example, the fixation portion 112 may comprise a solenoid, which is suitable to adhere to a magnetizable body of the die 150 by means of electromagnetic forces. For example, at least an upper portion of the die 150, or the die cover 160, may comprise or be made of a magnetizable steel and/or a magnetic material.

The projecting member 114 may be movable in the depth direction D. For example, the projecting member 114 may be movable relative to the fixation portion 112 and/or may be extendible (and retractable) in the depth direction D. The projecting member 114 may be movable in the depth direction in any suitable way as described above. In particular, the projecting member 114 may be mechanically biased in the depth direction by means of a spring (not shown) towards the interposer, i.e., in the rightward depth direction in the orientation of FIG. 1A.

The positioning apparatus 110 may further comprise a connection portion 118 that structurally connects the fixation portion 112 and the projecting member 114. The connection portion 118 may be also referred to as a body of the positioning device 110. The depiction in FIG. 1A and 1B is illustrative only for understanding of the subject matter. The shapes and dimensions of the positioning device 110 and any of its components, e.g., the fixation portion 112, the projecting member 114, the offset gauge 116 and the connection portion 118 may differ from the illustration in the drawings. Instead, the shapes and dimensions of the positioning device 110 and any of its components, e.g., the fixation portion 112, the projecting member 114, the offset gauge 116 and the connection portion 118 may be designed individually according to the requirements to the die 150 and a corresponding battery manufacturing process.

In FIG. 1A, the projecting member 114 rests against the front face F160 of the die 150. This position may be considered as a reference position, from which the projecting member 114 is moved in the height direction H and/or the depth direction D.

In the example shown in FIG. 1A, the projecting member 114 may be moved in the height direction H, particularly in a downward height direction in the orientation of FIG. 1A, until the projecting member is aligned with the cavity 152 and/or with the interposer 180. Alternatively or additionally, a height of the front face F160 of the die 150 and a height of the front face F180 of the interposer 180 may be known to the user, from which a predetermined height may be determined, by which the projecting member 114 is moved in the depth direction. For example, the predetermined height may correspond to the height of the front face F160 of the die 150, if the height of the front face F160 is equal to the height of the front face F180, or smaller, if the height of the front face F160 is larger than the height of the front face F180.

If the projecting member 114 is mechanically biased in the depth direction D towards the interposer 180, there may be repulsion when the projecting member 114 arrives at the front face F180 of the interposer 180, resulting in an acoustic feedback and/or a mechanical feedback that may be perceivable by a user.

FIG. 1B shows a state that the projecting member 114 has arrived at the front face F180 of the interposer 180. The projecting member 114 moves and/or extends in the depth direction D to be in physical contact with the front face F180 of the interposer 180.

The offset gauge 116 is mechanically in contact with the projecting member 114 and measures a distance, by which the projecting member 114 has moved in the depth direction D from the reference position on the front face F160 of the die 150. This distance may be output, for example displayed, by the offset gauge as a depth offset ΔD. The position of the interposer 180 in the cavity 152 of the die 150 may be determined based on the depth offset ΔD. Furthermore, the depth offset ΔD may be used to (re-)arrange the interposer 180 in the cavity 152 of the die 150 and/or to verify whether the interposer 180 is correctly arranged in the cavity 152 of the die. This may allow an increase of accuracy and efficiency for battery manufacturing compared to conventional systems and processes.

FIG. 2 shows an example of a die 150 in a perspective view. The die 150 in FIG. 2 comprises a die cover 160 and a die base 170 which have a respective end face such that their end faces face each other, and have a same general flat shape and a same size. The die 150 may comprise one or more hinges 152 to mechanically connect the die cover 160 and the die base 160 such that the die cover 160 and the die base 170 may be pivotable with respect to each other. The die 150 may further comprise a backside arrest 154 to form a backside wall (R150 in FIG. 1A and 1B) in a cavity that is to be formed between the die cover 160 and the die base 170.

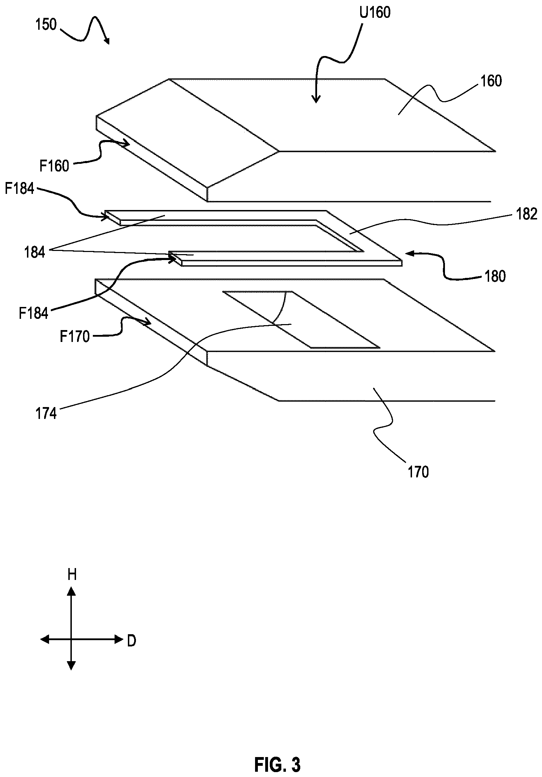

The lower die 170 further comprises a feed port 172 and a manifold 174. The feed port 172 is fluidly connected to a supply system that feeds a battery material to the die 150 (not shown). The manifold 172 may be an elongated recess along a width direction (that may be perpendicular to the depth direction and the height direction) formed in the upper end face of the die base 170. The feed port 172 is formed inside the manifold 172 such that the battery material arriving through the feed port 172 first spreads out inside the manifold 172 before reaching a cavity 152 formed between the die cover 160 and the die base 170, see also FIG. 1A and 1B as well as FIG. 3.

FIG. 3 schematically shows an exploded perspective view of a die 150 and an interposer 180 according to an example. The die 150 comprises a die cover 160 and a die base 170 as described above. The die cover 160 and the die base 170 may form a cavity 152 therebetween due to the presence of the interposer 180. The die base 170 comprises a manifold ₁₇₄ that may be provided as described above in connection with FIG. 2.

In the example shown in FIG. 3, the interposer 180 comprises a backside portion 182 that is to be aligned with a backside of the die 150. The backside portion 182 may have an elongated shape, particularly a bar shape, extending along a width direction that is perpendicular to the depth direction D and the height direction H.

The interposer 180 in the example of FIG. 3 further comprises two branch portions 184 extending from the backside portion 182 of the interposer 180 in the depth direction D. The branch portions 184 each terminate at a front face F184. The interposer 180 may have a uniform height. Accordingly, the branch portions 184 and the backside portion 182 may have a same height that is the uniform height of the interposer 180. The uniform height of the interposer may define the cavity 152 formed between the die cover 160 and the die base 170 as described above.

When positioning the interposer 180 in the cavity 152, the projecting member 114 as described above may be arranged such to be at a same level in the height direction H as the interposer 180 and then moved in the depth direction D towards the interposer 180 to be in physical contact with the front face F184 of any one of the branch portions 184. The procedural, functional and structural features related thereto may be as described above.

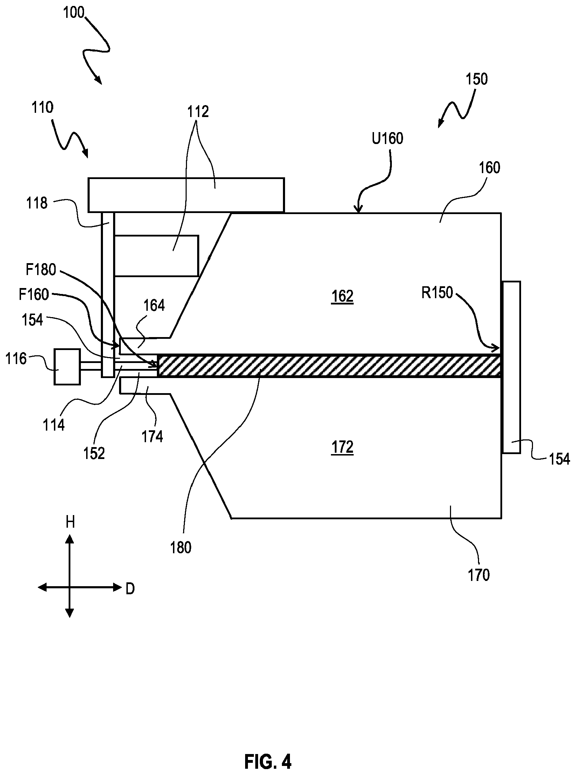

FIG. 4 schematically shows a cross-sectional view of a battery manufacturing system 100 according to an example. The battery manufacturing system may comprise any of the above-described features, particularly in connection with FIG 1A to 3, as also indicated by like reference signs, unless technically inappropriate or explicitly indicated otherwise. In the following, the detailed description will focus on different or new features while omitting repetitive description of already described features.

In the example shown in FIG. 4, the die cover 160 and the die base 170 of the die 150 each comprises a body portion 162, 172 and a lip portion 164, 174 protruding from a respective body portion 162, 172. As such, the front face F160 of the die 150 (or the die cover 160, or the lip portion 164 of the die cover 160) may have a surface area that is significantly reduced in view of the size of the die 150, particularly in view of the size of the body portion 162 of the die cover 160. This may further facilitate the positioning of the interposer 180 in the cavity 152 of the die 150.

As an optional feature, the die 150 may further comprise a backside arrest 154 as also described above in connection with FIG. 2. The backside arrest 154 may provide the backside wall R150 as also shown in FIG. 1A and 1B, against which the interposer 180 may rest in order to be aligned in the cavity 152 of the die 150.

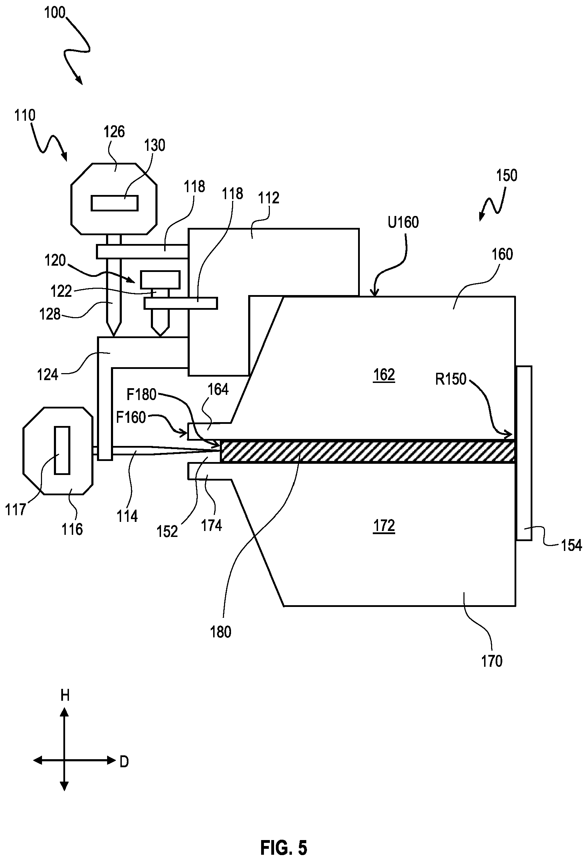

FIG. 5 schematically shows a cross-sectional view of a battery manufacturing system according to an example. The battery manufacturing system may comprise any of the above-described features, particularly in connection with FIG 1A to 4, as also indicated by like reference signs, unless technically inappropriate or explicitly indicated otherwise. In the following, the detailed description will focus on different or new features while omitting repetitive description of already described features. In particular, the die 150 in the example of FIG. 5A may be as described above in connection with FIG. 1 to 4.

In the example of FIG. 5, the positioning device 110 may further comprise a height adjustment device 120 that allows for moving the projecting member 114 in the height direction H. In particular, the height adjustment device 120 may comprise an adjustment screw 122 and a movable stage 124. The adjustment screw 122 may be stationary, for example by being fixed to the fixation portion 112 via the connection portion 118. The movable stage 124 may be slidable in the height direction H, for example by being mounted on the fixation portion 112 in a slidable manner in the height direction H. The projecting member 114 may be fixed to the movable stage 124 so as to move (i.e., be moved) together with the movable stage 124.

The adjustment screw 122 may be arranged and configured such that a rotation of the adjustment screw 122 around an axis parallel to the height direction H results in a translational movement of the adjustment screw 122 in the height direction H. The adjustment screw 122 may be arranged and operably coupled to the movable stage 124 such that the projecting member 114 can be moved in the height direction H by rotating the adjustment screw 122. The height adjust means 120 may be configured to move the projecting member 114 in the height direction H in this manner.

In the example of FIG. 5, the positioning device 110 may further comprise a height gauge 126 that is configured to measure and/or to display a height offset by which the projecting member 114 is moved in the height direction H from the reference position. As described above, the reference position may be on the front face F160 of the die 150 (or the die cover 160, or the lip portion 164 of the die cover 160). The positioning device 110 may be arranged such that the projecting member 114 rests against the front face F160. This initial position of the projecting member 114 may be set as the reference position. From this reference position, the projecting member 114 may be moved in the height direction H downwards in the orientation of FIG. 5, while the distance is monitored by the height gauge 126.

The height gauge 126 may comprise a retractable member 128 and a display unit 130. The height gauge 126 may be arranged such that the retractable member 128 can extend and retract in the height direction H. For example, the retractable member may be mechanically connected to a sensor circuit inside the height gauge 126 such that the height gauge 126 determines or measures the height offset by the extension or retraction of the retractable member 128. The measured height offset may be displayed on the display unit 130.

In the example of FIG. 5, the offset gauge 116 may be configured to display the depth offset ΔD that has been measured using the projecting member 114. For this purpose, the offset gauge 116 may comprise a display unit 117 in which the depth offset ΔD may be displayed in digits. The projecting member 114 may be mechanically coupled to the offset gauge 116, particularly to a sensor circuit thereof, such that the height gauge 116 can measure the distance by which the projecting member 114 is moved in the depth direction D. In such an example, the projecting member 114, the offset gauge 116 and the display unit 117 may be parts of an instrument that is configured to measure a depth offset by extending into a hollow space. The instrument may also be a digital caliper, digital indicator, or the like. The offset gauge 116 may be configured to display the depth offset ΔD with an accuracy of ± 0.1 mm or smaller, ± 0.01 mm or smaller or ± 0.001 mm or smaller.

In the example of FIG. 5, the projecting member 114 may have a conical shape tapering towards an end in the depth direction D, in particular towards an end to rest against the interposer 180. As such, the sliding of the projecting member 114 along the front face F160 of the die 150 (and the front face F180 of the interposer 180) may be facilitated.

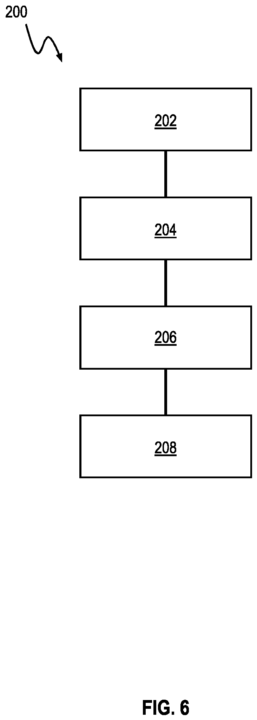

FIG. 6 shows a flow diagram of a method 200 for positioning an interposer in a cavity of a die according to an example. The method may be carried out by using the positioning apparatus and/or any of its embodiments disclosed herein. In particular, the method 200 may be carried out by using any of the battery manufacturing system 100 and the positioning apparatus 110 as described above in connection with the drawings.

Generally, the method 200 may start with a battery manufacturing system, in which a die has a cavity and an interposer is arranged in the cavity of the die. The method 200 may be adapted to position the interposer in the cavity of the die. As described above, the term positioning something as used herein may refer to determining a position of it, and/or arranging it so as to be in a target position, depending on the context and unless technically inappropriate.

At 202, a reference position is determined on the front face of the die. The reference position may be as described above. For example, the die may have a flat front face formed perpendicular to a depth direction and/or a principal extrusion direction of the die, each of which may be as described above.

At 204, a projecting member is moved from the reference position in a height direction by a predetermined height distance. Alternatively or additionally, the projecting member is moved from the reference position until the projecting member is at a same level in the height direction as the interposer. The moving of the projecting member may be carried out in any of the above-described manner. In particular, the projecting member of the method 200 may be the projecting member of the positioning apparatus as described above. As such, the projecting member may be part of the battery manufacturing system as described above.

In some other methods, the procedural feature at 204 may be optional. That is, the reference position may be aligned with the cavity of the die and/or the interposer arranged therein. In such situation, the method may proceed further with 206 without carrying out the procedural feature at 204 (i.e., 204 maybe omitted).

At 206, the projecting member is moved into the cavity of the die in a depth direction until the projecting member is in physical contact with the interposer, while maintaining a position of the projecting member in the first direction. The depth direction may be as described above and, particularly, may be parallel to or identical with a principal extrusion direction of the die. For example, the projecting member may come into physical contact with a front face of the interposer as described above.

At 208, a depth offset position is determined, by which the projecting member is moved in the depth direction from the reference position. In particular, the depth offset may indicate a distance between the reference position and the front face of the interposer in the depth direction. As such, the position of the interposer in the cavity of the die may be determined. This may be used to properly arrange the interposer in the cavity of the die.

The positioning apparatus, the battery manufacturing system and the method for positioning an interposer may each allow for a precise and efficient determination of a position of an interposer in a cavity of a die. Accordingly, the precision and/or efficiency for battery manufacturing may be increased.

## Claims

**1.** A positioning apparatus configured to determine a position of an interposer in a cavity of a die, wherein the positioning apparatus comprises:
a fixation portion configured to fix the positioning apparatus to a die;
a projecting member configured to be moved into the cavity of the die in a depth direction; and
an offset gauge configured to measure a depth offset by which the projecting member is moved in the depth direction.

**2.** The positioning apparatus of claim 1,
wherein the projecting member further configured to be moved in a height direction that is different from, particularly perpendicular to, the depth direction.

**3.** The positioning apparatus of claim 2, further comprising:
a height adjustment device, particularly including an adjustment screw, configured to move the projecting member in the height direction.

**4.** The positioning apparatus of claim 2 or 3, further comprising:
a height gauge to measure and/or display a height offset by which the projecting member is moved in the height direction from a reference position.

**5.** The positioning apparatus of any of the preceding claims,
wherein the fixation portion comprises a magnet and/or a solenoid to fix the positioning apparatus to a magnetizable body of the die.

**6.** The positioning apparatus of any of the preceding claims,
wherein the projecting member has a conical shape tapering towards an end in the depth direction.

**7.** The positioning apparatus of any of the preceding claims,
wherein the projecting member is biased by a spring in the depth direction.

**8.** The positioning apparatus of any of the preceding claims,
wherein the offset gauge is further configured to display the depth offset from a reference position.

**9.** A battery manufacturing system comprising:
a die having a front face, a cavity and an opening which is formed at the front face and communicates with the cavity, wherein the die is configured to extrude a battery material through the opening of the die;
an interposer arranged in the cavity of the die; and
a positioning apparatus configured to determine a position of the interposer, the positioning apparatus comprising a fixation portion, a projecting member and an offset gauge,
wherein the fixation portion is configured to fix the positioning apparatus to the die;
wherein the projecting member is configured to be moved into the cavity of the die in a depth direction,
wherein the offset gauge is configured to measure a depth offset by which the projecting member is moved in the depth direction in relation to the fixation portion.

**10.** The system of claim 9,
wherein the positioning apparatus is the positioning apparatus of any of claims 1 to 8.

**11.** The system of claim 9 or 10,
wherein the die comprises a die cover and a die base, wherein the cavity of the die is formed by maintaining a gap between the die cover and the die base,
wherein the die cover has a front face perpendicular to the principal extrusion direction and the die base has a front face perpendicular to the principal extrusion direction, the front faces of die cover and the die base being the front face of the die,
wherein the opening of the die is formed between the front face of the die cover and the front face of the die base,
wherein the front face of the die cover and/or the die base has a uniform height in a height direction perpendicular to the principal extrusion direction.

**13.** The system of any of claims 10 to 12,
wherein the cavity of the die has a depth in the depth direction,
wherein the interposer has a depth smaller than the depth of the cavity by a depth difference of 2 mm or less, particularly 1 mm or less, more particularly 0.5 mm or less.

**14.** A method for positioning an interposer in a cavity of a die, the method comprising:
determining a reference position on the front face of the die;
moving a projecting member from the reference position in a height direction by a predetermined height distance and/or until the projecting member is at a same level in the height direction as the interposer;
while maintaining a position of the projecting member in the first direction, moving the projecting member into the cavity in a depth direction until the projecting member is in physical contact with the interposer; and
determining a depth offset position by which the projecting member is moved in the depth direction from the reference position.

**15.** The method of 14, which is carried out using the positioning apparatus of any of claims 1 to 8 and/or the battery manufacturing system of any of claims 9 to 13.
